# EUROPÄISCHE PATENTSCHRIFT

(11) **EP 2 143 188 B1**
(45) Veröffentlichungstag und Bekanntmachung des Hinweises auf die Patenterteilung: **10.04.2013**
(21) Anmeldenummer: 08708750.8
(22) Anmeldetag: 06.02.2008
(51) Int. Cl.: H02K 5/14, H02K 5/22

(54) **GLEICHSTROMMASCHINE**
DC CURRENT MACHINE
MACHINE À COURANT CONTINU

(30) Priorität: 30.03.2007 DE 102007015782
(43) Veröffentlichungstag der Anmeldung: 13.01.2010
(73) Patentinhaber: Robert Bosch GmbH, 70442 Stuttgart (DE)
(72) Erfinder: MAURER, Erik, 77830 Buehlertal (DE); WINKLER, Wolfgang, 77746 Schutterwald (DE); HEIDRICH, Markus, 71229 Leonberg (DE)
(86) Internationale Anmeldenummer: PCT/EP2008/051459
(87) Internationale Veröffentlichungsnummer: WO 2008/119579

(56) Entgegenhaltungen:
- WO-A-03/007458
- DE-A1- 3 632 385
- FR-A- 2 855 668
- GB-A- 2 013 417
- US-A- 4 895 536

## Beschreibung

### Stand der Technik

Die Erfindung geht aus von einer Gleichstrommaschine, insbesondere einem Gleichstrommotor zum Antrieb des Gebläses eines Kraftfahrzeugens, nach der Gattung des unabhängigen Anspruchs. Hierzu sind bereits zweipolige Gleichstrom-Bürstenmotoren für die Verwendung in Heiz-und Klimagebläsen von Kraftfahrzeugen bekannt, welche für den Abgang der Einzelkabel der Plusleitung und der Minusleitung eine mechanische Zugentlastung aufweisen, die mit zusätzliche Anbauteilen realisiert ist. Derartige Anordnungen erfordern die Bereitstellung und Montage separater Teile, wodurch sich einerseits der Fertigungsaufwand und andererseits der Montageaufwand beim Zusammenbau der Maschine und hierdurch die Herstellungskosten erhöhen.

Aus der FR 2 855 6681 geht beispielsweise ein elektrischer Anlassermotor hervor, bei dem die Führung der Anschlusskabel und deren Zugentlastung durch unterschiedliche Teile erreicht werden. Zur Führung der Anschlusskabel sind an den Bürstenträger Vorsprünge angeformt, welche lediglich eine Führung und keine Zugentlastung für die Anschlusskabel bilden, da die Anschlusskabel mit Spiel durch den Vorsprung hindurchgeführt sind. Die Zugentlastung und Abdichtung erfolgt durch getrennte, elastische Elemente, welche nicht am Hürstenträger sondern am Polgehäuse arretiert sind.

Die WO 03/007458 beschreibt einen Bürstenträger, welcher zweiteilig ausgebildet ist mit einer Tragplatte und einer Halteplatine sowie mit Haltelaschen für den Bürstenträger, die mit in der Stirnfläche des Motorgehäuses angeordneten Rastausnehmungen formschlüssig verrastbar sind.

Die GB 2 013 417 betrifft eine elektrische Maschine mit einem Bürstenträger aus Kunststoff, welcher labyrinthartig geformte Führungen für die Anschlusskabel aufweist.

Die US PS 4 895 536 offenbart eine Bürstenträgeranordnung, die keine selbständige Halterung und Zugentlastung für die Anschlusskabel besitzt. Vielmehr ist an den Bürstenträger lediglich eine halbe Führungskontur für die Anschlusskabel angeformt, welche nach der Montage im Zusammenwirken mit dem Polgehäuse die Anschlusskabel einklemmt und arretiert.

Die DE 36 32 385 A1 beschreibt einen scheibenförmigen Bürstenträger, dessen Halterungen für die Anschlusskabel frei über des Polgehäuse hinaus ragen, wobei die Anschlusskabel nachträglich in vorspringende Ansatze zur Zugentlastung eingefädelt werden.

### Offenbarung der Erfindung

Die erfindungsgemäße Gestaltung einer Gleichstrommaschine mit den Merkmalen des unabhängigen Anspruchs hat den Vorteil, dass neben der Integration einer Zugentlastung für die Anschlusskabel in die Gestaltung des Bürstenträgers und die einteilige Ausbildung der Halterung für die elektrischen Anschlusskabel mit dem Bürstenträger als Kunststoffspritzteil die Halterung wenigstens einen elastisch verformbaren, wenigstens ein elektrisches Anschlusskabel mindestens teilweise umgreifenden Steg aufweist, welcher schon beim Zusammenbau und insbesondere in der fertigen Maschine einen vorgegebenen Druck auf das Anschlusskabel ausübt und hierbei gleichzeitig als Halterung und Zugentlastung dient. Weiterhin ist die Halterung für die Anschlusskabel zwischen dem Polgehäuse und einem Lagerschild derart eingespannt, das auf die Stege eine den Aufnahmequerschnitt für die Anschlusskabel reduzierende Kraft ausgeübt wird. Auf diese Weise sind die Anschlusskabel sicher arretier, und auf sie wirkende Zugkräfte können von der Halterung aufgefangen werden. Ferner ergibt sich in vorteilhafter Weise eine Einsparung von Montageteilen. Zweckmäßigerweise ist für jedes Anschlusskabel ein separate Steg vorgesehen, welcher entsprechend dem zu arretierenden Anschlusskabel geformt und bemessen ist, derart, dass er das Kabel bereits bei der Montage arretiert und so die Fertigung der Maschine erleichtert.

Weitere Einzelheiten und vorteilhafte Ausgestaltungen der Erfindung ergeben sich aus den weiteren. Unteransprüchen und der Beschreibung eines Ausführungsbeispiels der Erfindung.

### Kurze Beschreibung der Zeichnungen

Ein Ausführungsbeispiel der Erfindung ist in der Zeichnung dargestellt und in der nachfolgenden Beschreibung näher erläutert.

### Es zeigen

- Figur 1: eine perspektivische Gesamtansicht der erfindungsgemäßen Gleichstrommaschine,
- Figur 2: eine perspektivische Darstellung des Bürstenträgers einer Gleichstrommaschine mit angeformter Halterung für die Anschlusskabel und
- Figur 3: eine vergrößerte perspektivische Darstellung der Halterung für die Anschlusskabel der Maschine.

### Ausführungsform der Erfindung

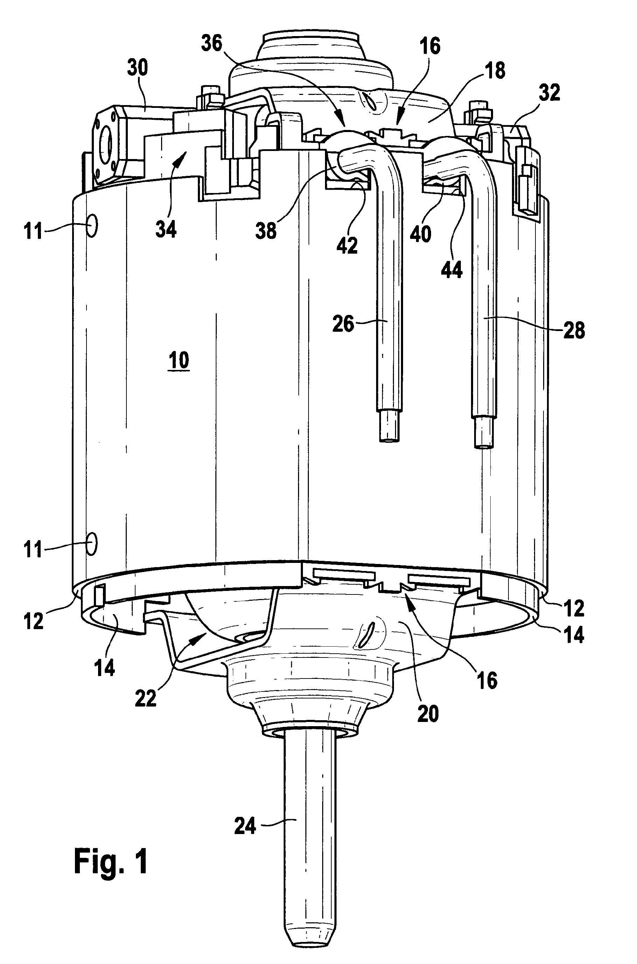

In Figur 1 ist ein Gleichstrommotor dargestellt, wie er zum Beispiel für Heiz- oder Klimagebläse von Kraftfahrzeugen eingesetzt wird. Hierbei ist mit 10 ein doppellagiges Polgehäuse bezeichnet, welches in bekannter Weise aus zwei in Schweißpunkten 11 miteinander verbundenen Blechen 12 und 14 in einem Rollvorgang in seine hohlzylindrische Gestalt geformt ist. Mit dem inneren Blech 14 sind durch schwalbenschwanzartige Verstemmungen 16 zwei Lagerschilde 18 und 20 verbunden, in welchen der Rotor 22 der Maschine drehbar gelagert ist. Zwei aus der Abbildung nicht ersichtliche Statorpole werden von innen am Polgehäuse 10 befestigten Permanentmagneten gebildet. Der Abtrieb des Motors erfolgt über eine Rotorwelle 24.

Zur Stromversorgung der Maschine dienen zwei Anschlusskabel 26 und 28, welche mit dem Plus- und dem Minusanschluss einer Gleichspannungsquelle verbindbar sind und über zwei in der Figur nicht sichtbare, in Bürstenhaltern 30 und 32 geführte Bürsten den Rotor 22 über einen ebenfalls nicht sichtbaren Kollektor speisen.

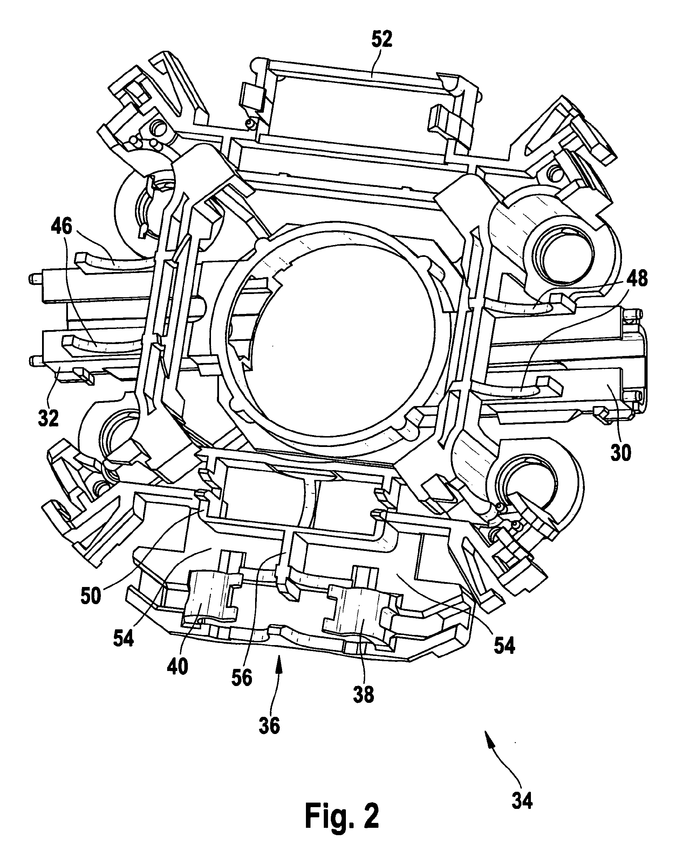

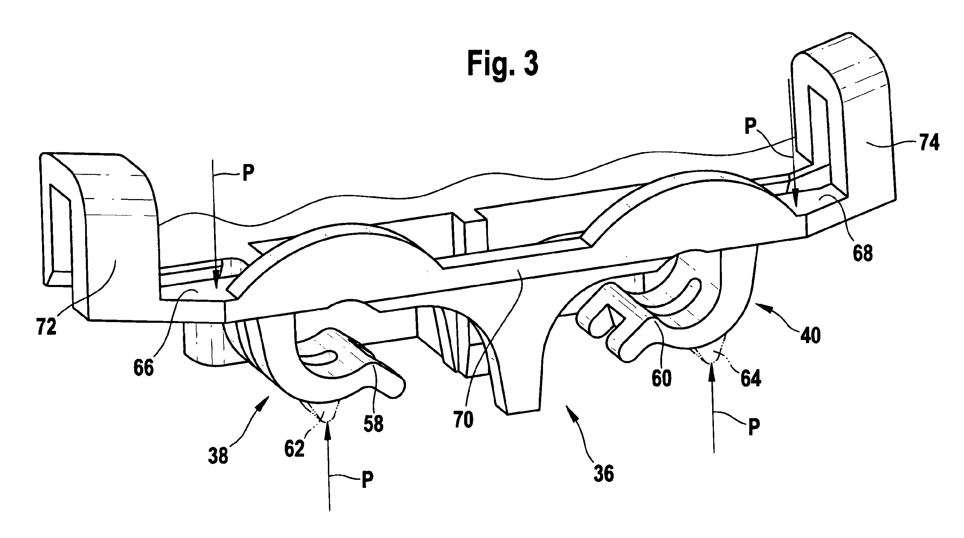

Die Bürstenhalter 30 und 32 sind Teil eines Bürstenträgers 34, welcher in Figur 2 detailliert dargestellt ist und dort näher erläutert ist. In den Bürstenträger 34 ist eine Halterung 36 für die Anschlusskabel 26 und 28 integriert, welche gleichzeitig als Zugentlastung für die Kabel dient. Wesentliche Teile dieser Halterung sind zwei kreissegmentförmig ausgebildete Stege 38 und 40, welche jeweils eines der Anschlusskabel 26 und 28 umgreifen und in Aussparungen 42 und 44 des Polgehäuses 10 hineinragen. Bei der Montage des oberen Lagerschildes 18 werden die Stege 38 und 40 durch den inneren Blechmantel 14 vom Boden der Aussparungen 42 und 44 her an die Anschlusskabel 26 und 28 angepresst, sodass die Stege 38 und 40 neben der Arretierung der Anschlusskabel bei der Montage im fertigen Zustand der Maschine zusätzlich die Zugentlastung der Kabel bilden. Hierbei stützen sich die Kabel 26 und 28 an darüber liegenden, in Figur 3 erkennbaren Abschnitten 66 und 68 der Isolierstoffhalterung 36 ab.

Figur 2 zeigt in perspektivischer Darstellung den Bürstenträger 34 der Maschine mit der angeformten Halterung 36 für die Anschlusskabel 26 und 28. Die Halterung 36 ist hierbei einteilig mit dem Bürstenträger 34 als Kunststoffspritzteil gefertigt. Die Darstellung in Figur 2 zeigt den Bürstenträger 34 von der Innenseite der Maschine her, wobei die einteilige Ausbildung des Bürstenträgers 34 mit der Halterung 36, insbesondere mit deren Stegen 38 und 40 sichtbar ist. Außer den Bürstenhaltern 30 und 32 erkennt man in dieser Darstellung zwei weitere Halter 46 und 48 für die Aufnahme von Entstördrosseln, einen Halter 50 zur Aufnahme eines Entstörkondensators und einen Halter 52 zur Aufnahme eines Thermoschalters, welche ebenfalls an den Bürstenträger 34 angespritzt sind. Die in der Figur nicht dargestellten Kohlebürsten sind in den Bürstenhaltern 30 und 32 in bekannter Weise längsverschiebbar angeordnet und werden mit den zuvor genannten Einbauteilen auf dem Bürstenträger 34 vormontiert und als Baueinheit zwischen dem Polgehäuse 10 und dem Lagerschild 18 in die Maschine eingefügt. Die Halterung 36 für die Anschlusskabel 26 und 28 ist hierbei benachbart zu dem Halter 50 an den Bürstenträger 34 angeformt und durch einen plattenförmigen Abschnitt 54 sowie einen Wandabschnitt 56 mit dem Bürstenträger 34 einteilig verbunden.

Figur 3 zeigt die Halterung 36 für die Anschlusskabel 26 und 28 in einer weiteren perspektivischen, vergrößerten Darstellung ohne den Bürstenträger 34. Diese Darstellung entspricht der Einbaulage der Halterung 36 gemäß Figur 1, wobei die Stege 38 und 40 nach unten vorspringen. Die Stege 38 und 40 sind elastisch verformbar und umgreifen jeweils ein Anschlusskabel. Die Stege sind hierbei jeweils einseitig an die Halterung 36 angeformt und besitzen am gegenüberliegenden offenen Ende wulstförmige Verdickungen 58, 60, welche die Anschlusskabel nach dem Einrasten zwischen den Stegen 38, 40 und dem darüber liegenden Abschnitt 66, 68 der Halterung 36 in ihrer Position zusätzlich arretieren. Diese Arretierung der Kabel 26 und 28 wird noch weiter verstärkt durch den Presssitz beim Einbau zwischen dem Polgehäuse 10 und dem Lagerschild 18, wobei die Randabschnitte der Aussparungen 42 und 44 von unten und der Flansch des Lagerschildes 18 von oben Druck auf die Stege 38 und 40 ausüben. Hierbei können an den Stegen 38 und 40 im Bereich der Auflage in den Aussparungen 42 und 44 zusätzliche Rippen 62 und 64 angeformt werden, um definierte Auflagepunkte und Auflagekräfte zu erzeugen. Der Anpressdruck durch den Befestigungsflansch des Lagerschildes 18 erfolgt von oben auf die Abschnitte 66 und 68 der Halterung 36. Die jeweiligen Anpresskräfte sind schematisch durch Pfeile P angedeutet. Die Breite der Stege 38 und 40 ist so bemessen, dass diese nach außen über das Polgehäuse 10 vorstehen und die Kabel 26, 28 gegen scharfkantige Ränder des Polgehäuses schützen. Ein äußerer Verbindungssteg 70 sowie zwei U-förmige Verbindungsabschnitte 72 und 74 zum Bürstenträger 34 erhöhen hierbei die Stabilität der Halterung 36.

Durch die erfindungsgemäße Ausbildung der Gleichstrommaschine mit einer in die Maschine, insbesondere in den Bürstenträger 34 integrierten Halterung und Zugentlastung für die elektrischen Anschlusskabel 26, 28 erreicht man nahezu ohne Mehraufwand eine sichere Arretierung der isolierten Anschlusskabel bei gleichzeitig erleichterter Montage der Maschine. Durch die Aussparungen 42 und 44 im Polgehäuse 10 wird die Ausrichtung der Bauteile bei der Montage weiter vereinfacht und ein Schutz für die Stege 38 und 40 erzielt. Die Stege erzeugen gleichzeitig einen Reibschluss und einen Formschluss zum Isolierungsmantel der Anschlusskabel 26 und 28, da sie bei der Montage leicht in die Kabelisolierung eingedrückt werden. Zusätzliche Bauteile und Arbeitsschritte für die Zugentlastung der Anschlusskabel können entfallen.

## Patentansprüche

1. Gleichstrommaschine, insbesondere Gleichstrommotor, zum Antrieb eines Gebläses eines Kraftfahrzeuges, mit einem den Stator der Maschine bildenden Polgehäuse (10), einem in zwei Lagerschilden (18, 20) drehbar gelagerten Rotor (22) und einem Bürstenträger (34) für die Stromzufuhr zum Rotor (22), in den eine Halterung (36) mit Zugentlastung für die elektrischen Anschlusskabel (26, 28) der Maschine integriert ist, wobei die Halterung (36) wenigstens einen elastisch verformbaren, wenigstens eines der elektrischen Anschlusskabel (26, 28) mindestens teilweise umgreifenden Steg (38, 40) aufweist, **dadurch gekennzeichnet, dass** der Bürstenträger (34) und die Halterung (36) für die Anschlusskabel (26, 28) einteilig als Kunststoffspritzteil hergestellt sind und dass die Halterung (36) für die Anschlusskabel (26, 28) zwischen dem Polgehäuse (10) und einem Lagerschild (18) derart eingespannt ist, dass auf die Stege (38, 40) eine den Aufnahmequerschnitt für die Anschlusskabel (26, 28) reduzierende Kraft ausgeübt wird.

2. Gleichstroinmaschine nach Anspruch 1, **dadurch gekennzeichnet, dass** für jedes Anschlusskabel (26, 28) ein separater Steg (38, 40) vorgesehen ist.

3. Gleichstroinmaschine nach einem der vorhergehenden Ansprüche, **dadurch gekennzeichnet, dass** die Stege (38, 40) für jedes Anschlusskabel (26, 28) einseitig an die Halterung (36) angeformt sind.

4. Gleichstrommaschine nach einem der vorhergehenden Ansprüche, **dadurch gekennzeichnet, dass** die Stege (38, 40) In Aussparungen (42, 44) des Polgehäuses (10) hineinragen.

5. Gleichstrommaschine nach einem der vorhergehenden Ansprüche, **dadurch gekennzeichnet, dass** die Stege (38, 40) im Wesentlichen kreissegmentförmig ausgebildet sind.

6. Gleichstrommaschine nach einem der vorhergehenden Ansprüche, **dadurch gekennzeichnet, dass** die Stege (38, 40) an ihrem offenen Ende eine wulstartige Verdickung (58) besitzen.

## Claims

1. DC machine, in particular DC motor, for driving a fan of a motor vehicle, having a pole housing (10) which forms the stator of the machine, a rotor (22) which is rotatably mounted in two end plates (18, 20), and a brush support (34) for supplying current to the rotor (22), a mount (36) with strain-relief means for the electrical connection cables (26, 28) of the machine being integrated in the said brush support, with the mount (36) having at least one elastically deformable web (38, 40) which at least partially surrounds at least one of the electrical connection cables (26, 28), **characterized in that** the brush support (34) and the mount (36) for the connection cables (26, 28) are integrally produced as an injection-moulded plastic part, and **in that** the mount (36) for the connection cables (26, 28) is clamped-in between the pole housing (10) and an end plate (18) in such a way that a force which reduces the receiving cross section for the connection cables (26, 28) is exerted on the webs (38, 40).

2. DC machine according to Claim 1, **characterized in that** a separate web (38, 40) is provided for each connection cable (26, 28).

3. DC machine according to either of the preceding claims, **characterized in that** the webs (38, 40) for each connection cable (26, 28) are integrally formed on one side of the mount (36).

4. DC machine according to one of the preceding claims, **characterized in that** the webs (38, 40) project into cutouts (42, 44) in the pole housing (10).

5. DC machine according to one of the preceding claims, **characterized in that** the webs (38, 40) are substantially in the form of segments of a circle.

6. DC machine according to one of the preceding claims, **characterized in that** the webs (38, 40) have a bead-like thickened portion (58) at their open end.

## Revendications

1. Machine à courant continu, en particulier moteur à courant continu, pour l'entraînement d'une soufflante d'un véhicule automobile, comprenant un boîtier polaire (10) formant le stator de la machine, un rotor (22) monté à rotation dans deux panneaux de support (18, 20) et un porte-balais (34) pour l'alimentation en courant au rotor (22), dans lequel est intégrée une fixation (36) avec détente de traction pour les câbles de raccordement électriques (26, 28) de la machine, la fixation (36) présentant au moins une nervure (38, 40) déformable élastiquement, venant en prise au moins en partie autour de l'un des câbles de raccordement électriques (26, 28), **caractérisée en ce que** le porte-balais (34) et la fixation (36) pour les câbles de raccordement (26, 28) sont fabriqués d'une seule pièce sous forme de pièce moulée par injection de plastique, et **en ce que** la fixation (36) pour les câbles de raccordement (26, 28) est serrée entre le boîtier polaire (10) et un panneau de support (18) de telle sorte qu'une force réduisant la section transversale de réception pour les câbles de raccordement (26, 28) soit exercée sur les nervures (38, 40).

2. Machine à courant continu selon la revendication 1, **caractérisée en ce que** pour chaque câble de raccordement (26, 28) est prévue une nervure séparée (38, 40).

3. Machine à courant continu selon l'une quelconque des revendications précédentes, **caractérisée en ce que** les nervures (38, 40) pour chaque câble de raccordement (26, 28) sont façonnées d'un côté sur la fixation (36).

4. Machine à courant continu selon l'une quelconque des revendications précédentes, **caractérisée en ce que** les nervures (38, 40) pénètrent dans des évidements (42, 44) du boîtier polaire (10).

5. Machine à courant continu selon l'une quelconque des revendications précédentes, **caractérisée en ce que** les nervures (38, 40) sont réalisées substantiellement sous forme de segments circulaires.

6. Machine à courant continu selon l'une quelconque des revendications précédentes, **caractérisée en ce que** les nervures (38, 40) possèdent à leur extrémité ouverte un épaississement en forme de bourrelet (58).
